# EUROPÄISCHE PATENTSCHRIFT

(11) **EP 1 966 066 B1**
(45) Veröffentlichungstag und Bekanntmachung des Hinweises auf die Patenterteilung: **05.08.2009**
(21) Anmeldenummer: 06830691.9
(22) Anmeldetag: 18.12.2006
(51) Int. Cl.: B65G 1/137, A61J 7/00, G07F 11/62

(54) **AUTOMATISIERTE LAGERANORDNUNG UND VERFAHREN ZUM LAGERN UND AUSGEBEN VON ARZNEIMITTELN**
AUTOMATED STORE ARRANGEMENT AND METHOD FOR STORING AND DISPENSING MEDICAMENTS
SYSTEME DE STOCKAGE AUTOMATISE ET PROCEDE DE STOCKAGE ET DE DISTRIBUTION DE MEDICAMENTS

(30) Priorität: 30.12.2005 DE 102005063197
(43) Veröffentlichungstag der Anmeldung: 10.09.2008
(73) Patentinhaber: Haas, Gerhard, 69412 Eberbach (DE)
(72) Erfinder: Haas, Gerhard, 69412 Eberbach (DE)
(74) Vertreter: Köllner, Malte
(86) Internationale Anmeldenummer: PCT/EP2006/069854
(87) Internationale Veröffentlichungsnummer: WO 2007/077117

(56) Entgegenhaltungen:
- WO-A-92/10985
- DE-A1- 19 509 951
- US-A1- 3 917 045
- US-A1- 4 546 901

## Beschreibung

Die Erfindung betrifft eine automatisierte Lageranordnung zum Lagern und Ausgeben von Arzneimitteln sowie ein Verfahren zum Lagern und Ausgeben von Arzneimitteln in beziehungsweise aus einer automatisierten Lageranordnung.

Arzneimittel werden in Apotheken üblicherweise in Form von Packungen und Flaschen gelagert, wobei die Packungen üblicherweise quaderförmig sind und Behälter (z. B. Flaschen) oder Blister zur Aufnahme einer vorgegebenen Anzahl von Tabletten, Kapseln oder Ampullen (nachfolgend "Arzneimittelportionen" genannt) enthalten können. Die Lagerung dieser Arzneimittelpakkungen und Flaschen erfolgte in den Apotheken traditionell in Ziehschränken (manuell betätigte Schubladensysteme).

Moderne Lagerhaltungssysteme, wie sie beispielsweise aus DE 195 09 951 C2 bekannt sind, lösen mittlerweile die manuellen Systeme ab. Hier werden die Arzneimittelpackungen auf Lagerflächen (beispielsweise auf ebenen Regalböden oder geneigten Lagerschächten) gelagert, auf die über automatisierte Entnahmesysteme (Bediengeräte und Fördereinrichtungen) so zugegriffen werden kann, daß eine computergesteuerte Auslagerung (Ausgabe) gewünschter Arzneimittelpackungen möglich ist. Bei einem Teil der modernen Lagerhaltungssysteme ist zusätzlich eine automatisierte Einlagerung der Arzneimittelpackungen möglich.

Ein Merkmal einiger im Markt etablierer Systeme ist die chaotische Lagerhaltung der Packungen. Die Arzneimittelpackungen werden beispielsweise auf ebenen Glasböden ohne feste Einrichtung vorgegebener Lagerplätze bei optimierter Flächenausnutzung gelagert, wobei ein Computersystem die Lagerorte sämtlicher Packungen verwaltet und ein auf die Packungen zugreifendes Bediengerät steuert. Gleichartige Packungen brauchen nicht nebeneinander zu liegen; vielmehr können die Arzneimittelpackungen beliebig über sämtliche Lagerflächen verteilt werden, wobei die Auswahl der Lagerflächen beim Einlagern so vorgenommen wird, daß unter anderem eine optimale Flächenausnutzung erreicht wird.

Diese modernen Lagerhaltungssysteme ermöglichen die automatisierte Abgabe vollständiger zuvor eingelagerter Arzneimittelpackungen. Es können mehrere gleichartige oder verschiedene Arzneimittelpackungen ausgegeben werden, wobei die Art und Anzahl der ausgegebenen Arzneimittelpackungen einer Kundenbestellung bzw. einem Rezept entsprechen können.

Es ist jedoch grundsätzlich nicht möglich, einzelne Arzneimittelportionen (Tabletten, Kapseln, Blisterpackungen oder Teile von diesen) auszugeben oder wieder einzulagern, wenn diese nicht benötigt werden. Eine Abgabe von Arzneimitteln als Einzeldosen, beispielsweise nach Angabe einer Verordnung, bei der für vorgegebene zukünftige Zeitpunkte eine Reihe von Einzeldosen (Tabletten oder Kapseln) in der Reihenfolge ihrer Einnahme verpackt werden (beispielsweise in Folien oder Blisterpackungen verschweißt werden), müßte von der Apotheke manuell oder mit separaten Vorrichtungen vorgenommen werden. Eine Apotheke, die einzelne Dosen gemäß einer Verordnung in Zuordnung zu bestimmten Einnahmezeitpunkten automatisiert verpacken möchte, benötigt hierzu separate Dispensiersysteme, die für jedes auf diese Weise bereitzustellende Medikament (z. B. für jede Tabletten- oder Kapselart) einen separaten Behälter benötigten, wobei der Behälter die Tabletten oder Kapseln in loser Form enthält und eine Einrichtung einen Mechanismus enthält, mit deren Hilfe die einzelnen Tabletten oder Kapseln aus Behältern entnommen werden können. Bei den für ein automatisches Verpacken (beispielsweise Einschweißen, Verblistern) vorgesehenen Systemen kann jeder dieser Behälter, aus dem eine Tablette oder eine Kapsel für eine herzustellende Packung benötigt wird, in eine spezielle Aufnahme eines Automaten eingesetzt werden, wobei die Anzahl solcher Aufnahmen die Anzahl der verschiedenen in dieselbe Packung einbringbaren Medikamente begrenzt. Soll beispielsweise ein Medikament in eine Packung eingeschweißt werden, das in keinem der in den Aufnahmen liegenden Behälter enthalten ist, so ist eine Entnahme eines Behälters und ein anschließendes Einlegen eines das geforderte Medikament enthaltenden Behälters erforderlich.

Aufgabe der Erfindung ist es, ein automatisiertes Apotheken-Lagerhaltungssystem zu schaffen, das neben einer Lagerung und Ausgabe herkömmlicher Arzneimittelpackungen eine kostengünstige Möglichkeit einer Abgabe von Arzneimitteln in Einzeldosen gestattet.

Diese Aufgabe wird erfindungsgemäß durch eine automatisierte Lageranordnung mit den Merkmalen des Patentanspruchs 1 bzw. ein Verfahren zum Lagern und Ausgeben von Arzneimitteln mit den Merkmalen des Patentanspruchs 10 gelöst.

Grundgedanke der Erfindung ist die Einbindung von die Abgabe von Arzneimitteln als Einzeldosen ermöglichenden automatisierten Dispensiervorrichtungen in moderne automatisierte Lagerhaltungssysteme derart, daß die modernen Lagerhaltungssysteme neben den herkömmlichen Arzneimittelpackungen in gleicher Weise auch Behälter der Dispensiervorrichtung (Kassetten), die jeweils eine Vielzahl von Arzneimittelportionen (Tabletten, Kapseln, Ampullen oder dergleichen) enthalten, verwalten und handhaben können, wobei die Kassetten und/oder die Bediengeräte so angepaßt werden, daß die in die Dispensiervorrichtung einzusetzenden Kassetten mit Hilfe des Bediengeräts des modernen Lagerhaltungssystems schnell ausgewechselt werden können, so daß die Dispensiervorrichtungen nur noch wenige Aufnahmen für derartige Kassetten benötigen und dennoch eine höhere Flexibilität erreichen. Dies führt zu erheblich kostengünstigeren Dispensiersystemen.

Die erfindungsgemäße automatisierte Lageranordnung zum Lagern und Ausgeben von Arzneimitteln weist mehrere Lagerflächen auf, die jeweils mehrere Arzneimittelpackungen und/oder Kassetten aufnehmen können. Die Lagerflächen können beispielsweise ebene Regalböden oder auch Auflageflächen geneigter Lagerschächte sein. Die Arzneimittelpackungen umfassen beispielsweise quaderförmige Packungen, die eingeschweißte (verblisterte) Tabletten, Kapseln oder Ampullen oder auch Flaschen oder Röhrchen enthalten. Die Kassetten können jeweils eine Vielzahl von Arzneimittelportionen aufnehmen und weisen eine integrierte Abgabeeinrichtung zur Abgabe einzelner Arzneimittelportionen auf. Arzneimittelportionen sind beispielsweise vereinzelte Tabletten, Kapseln oder Ampullen. Selbstverständlich können die Arzneimittelportionen auch kleine Packungseinheiten von jeweils mehreren gleichen oder verschiedenartigen Tabletten umfassen. Die integrierte Abgabeeinrichtung kann in einem einfachen Fall nur eine Öffnung sein, die so ausgebildet und angeordnet ist, daß sie die Arzneimittelportionen einzeln nacheinander ausgibt, sofern die Öffnung freigegeben wird. Bei der integrierten Abgabeeinrichtung kann es sich aber auch um einen komplizierten elektro-mechanischen Vereinzelungsmechanismus handeln, wobei in diesem Fall der Kassette eine Spannungsversorgung für den Mechanismus und Steuersignale zum Aktivieren des Mechanismus zugeführt werden. Das Merkmal der Lageranordnung, nach dem die mehreren Lagerflächen jeweils mehrere Arzneimittelpackungen und/oder Kassetten aufnehmen können, besagt, daß beispielsweise bei einer Ausführungsform sämtliche Lagerflächen sowohl Arzneimittelpackungen als auch Kassetten aufnehmen, bei anderen Ausführungsformen jedoch nur ausgewählte Lagerflächen neben den Arzneimittelpackungen auch Kassetten aufnehmen können oder bei wiederum anderen Ausführungsformen bestimmte Lagerflächen für die ausschließliche Aufnahme von Kassetten reserviert sein können.

Die erfindungsgemäße automatisierte Lageranordnung weist ferner wenigstens ein Bediengerät zum Ein- und Auslagern von Arzneimittelpackungen und Kassetten auf die beziehungsweise aus den Lagerflächen auf. Das Bediengerät, welches beispielsweise einen Backen- und/oder einen Sauggreifer aufweisen kann, welches aber auch ein vor Lagerschächten verfahrbarer geneigter Pufferschacht mit einer Auslöseeinrichtung zur Entnahme von Stückgütern aus Lagerschächten sein kann, ist so ausgebildet, daß es sowohl Arzneimittelpackungen als auch Kassetten greifen oder aufnehmen kann, wobei gegebenenfalls die Kassetten so gestaltet oder angepaßt sind, daß sie von dem Bediengerät gegriffen beziehungsweise aufgenommen werden können.

Ferner weist die erfindungsgemäße automatisierte Lageranordnung eine Dispensiervorrichtung zur Herstellung von jeweils mehrere Arzneimittelportionen enthaltenden Arzneimittelpackungen auf. Herstellung bedeutet hier, daß die vollständig mit Arzneimittelportionen gefüllte Packung hergestellt wird; es bedeutet aber nicht notwendigerweise, daß auch der Behälter oder die Umhüllung der hergestellten Packung jeweils neu hergestellt werden müßte. Die Dispensiervorrichtung weist wenigstens eine Kassettenaufnahme, eine Auslöseeinrichtung und eine Verpackungsvorrichtung auf. Der Kassettenaufnahme (oder jeder der Kassettenaufnahmen) kann das Bediengerät jeweils eine Kassette zuführen, wobei das Bediengerät die Kassette auch wieder aus der Kassettenaufnahme entnehmen kann. Die Dispensiervorrichtung weist vorzugsweise mehrere Kassettenaufnahmen auf, wobei deren Anzahl so optimiert ist, daß bei möglichst hoher Geschwindigkeit der Herstellung gemischter Arzneimittelpackungen eine möglichst geringe Größe der Dispensiervorrichtung erreicht wird. Wird die Anzahl der Kassettenaufnahmen zu gering gewählt, so kann es bei der Herstellung von Arzneimittelpakkungen (beispielsweise Blistern), die mehrere verschiedene Arzneimittelportionen enthalten, vorkommen, daß für die Herstellung der Blister die in den Kassettenaufnahmen einliegenden Kassetten zu häufig gewechselt werden müssen. Wird dagegen die Anzahl der Kassettenaufnahmen zu hoch gewählt, so wird die Dispensiervorrichtung größer und teurer. Die Auslöseeinrichtung der Dispensiervorrichtung kann die Abgabeeinrichtung der in einer Kassettenaufnahme enthaltenen Kassette derart aktivieren, daß Arzneimittelportionen in einer vorgegebenen Anzahl austreten. Die Abgabeeinrichtung der Kassette und die Auslöseeinrichtung der Dispensiervorrichtung sind so aufeinander abgestimmt, daß sie zusammen dafür sorgen, daß die Arzneimittelportionen einzeln und in vorgegebener Anzahl und Reihenfolge entnommen werden. "Aktivieren" der Abgabeeinrichtung durch die Auslöseeinrichtung bedeutet hierbei beispielsweise, daß - bei einem einfachen mechanischen Abgabemechanismus der Kassette - dieser von einer elektrisch angesteuerten Auslöseeinrichtung so betätigt wird, daß die gewünschte Anzahl von Arzneimittelportionen in der gewünschten Sequenz austritt. Bei einer integrierten Abgabeeinrichtung, die einen elektronisch gesteuerten Abgabemechanismus aufweist, bedeutet "aktivieren", daß dieser Abgabemechanismus beispielsweise mit Versorgungsspannung und Steuersignalen versorgt wird, die die Anzahl der Arzneimittelportionen in der gewünschten Sequenz spezifizieren. Die Verpackungsvorrichtung der Dispensiervorrichtung kann jeweils mehrere austretende Arzneimittelportionen aufnehmen und in die herzustellende Arzneimittelpackung verpacken. Hierbei kann es sich einfach um eine Vorrichtung handeln, die die Arzneimittelportionen in Folien verschweißt oder in mehrere zusammenhängende kleine Plastikbecher füllt und diese dann verschließt, wobei die einzelnen Positionen in der verschweißten Folie oder in der Blisterpackung oder die einzelnen Plastikbecher bestimmten Einnahmezeitpunkten zugeordnet sein können.

Die erfindungsgemäße automatisierte Lageranordnung weist schließlich eine Steuereinrichtung auf, die mit dem Bediengerät und mit der Auslöseeinrichtung und der Verpackungsvorrichtung gekoppelt ist und diese so steuert, daß Arzneimittelportionen wenigstens einer vorgegebenen Art in jeweils vorgegebener Anzahl und Reihenfolge in der herzustellenden Arzneimittelpackung verpackt werden. Vorzugsweise umfaßt die Steuereinrichtung eine Mikroprozessorsteuerung.

Bei einer Ausführungsform der automatisierten Lageranordnung sind die Lagerflächen ebene Regalböden eines Regallagers. Das Bediengerät ist vorzugsweise vor den Regalböden verfahrbar und weist einen (ebenen) Transporttisch auf und kann die Arzneimittelpackungen oder Kassetten von den Regalböden auf den Transporttisch ziehen. Dies erfordert, daß nicht nur die Arzneimittelpackungen sondern auch die Kassetten einen Boden bzw. eine Auflagefläche aufweisen, der bzw. die ein Ziehen über eine ebene Oberfläche gestattet. Bei einer bevorzugten Ausführungsform dieser Art weist das Bediengerät einen Sauggreifer auf. Die Kassetten weisen hier eine im wesentlichen senkrecht angeordnete ebene Seitenfläche auf, an der der Sauggreifer ansetzen kann.

Bei einer bevorzugten Ausführungsform der automatisierten Lageranordnung sind die Arzneimittelpackungen und die Kassetten auf den Lagerflächen chaotisch und unter optimaler Ausnutzung der zur Verfügung stehenden Lagerflächen gelagert. Eine Kassette kann dabei an einer beliebigen Stelle gelagert werden, an der ein ausreichend hoher Lagerraum zur Aufnahme der Kassette zur Verfügung steht und an der die unbelegte Lagerfläche groß genug ist, um eine Kassette aufzunehmen. Bei einer bevorzugten Anordnung wird dann, wenn gleichzeitig mehrere freie Lagerflächen zu Aufnahme einer Kassette zur Verfügung stehen, von der Steuereinrichtung diejenige Lagerfläche ausgewählt, die einen möglichst schnellen Transport der Kassette zur Kassettenaufnahme der Dispensiervorrichtung gestattet.

Bei einer Ausführungsform der automatisierten Lageranordnung umfaßt die integrierte Abgabeeinrichtung einer Kassette einen mechanisch betätigbaren Ausgabemechanismus zur Ausgabe jeweils einer einzelnen Arzneimittelportion. Die Auslöseeinrichtung der Dispensiervorrichtung weist in diesem Fall einen durch elektrische Steuersignale der Steuereinrichtung auslösbaren Betätigungsmechanismus zum Betätigen des Ausgabemechanismus auf. Bei einer anderen Ausführungsform, bei der ein größerer Teil der Intelligenz in die Kassette verlagert ist, umfasst die integrierte Abgabeeinrichtung der Kassette einen durch elektrische Steuersignale betätigbaren elektro-mechanischen Ausgabemechanismus zur Ausgabe einzelner Arzneimittelportionen und eine Schnittstelle mit ersten Kontakten. Die Auslöseeinrichtung der Dispensiervorrichtung umfaßt eine Steuersignale der Steuereinrichtung empfangende Schnittstelle mit an der Kassettenaufnahme angeordneten zweiten Kontakten, wobei dann, wenn eine Kassette in der Kassettenaufnahme liegt, die ersten mit den zweiten Kontakten derart verbunden sind, daß die Steuersignale und eine Spannungsversorgung an den elektro-mechanischen Ausgabemechanismus weitergeleitet werden können.

Bei einer bevorzugten Weiterbildung weist die Dispensiervorrichtung der automatisierten Lageranordnung eine Kennzeichnungsvorrichtung zum Kennzeichnen der herzustellenden Arzneimittelpackungen auf. Diese Kennzeichnungsvorrichtung kann einen Drucker, einen Barcode-Drucker oder eine Prägeeinrichtung umfassen. Mit ihrer Hilfe können Aufschriften, Barcodes oder Einprägungen auf die Arzneimittelpackungen aufgebracht werden, die die Arzneimittelpackung identifizieren und/oder Einnahmevorschriften, Dosierempfehlungen und ähnliches umfassen. Bei einer Ausführungsform wird beispielsweise ein Barcode auf die hergestellte Arzneimittelpackung aufgedruckt, wobei dem Barcode in der Steuereinrichtung Informationen zugeordnet werden können, die die in der Packung enthaltenen Arzneimittel und deren Anordnung und Sequenz eindeutig kennzeichnen. Die Kennzeichnungsvorrichtung kann auch eine Vorrichtung zum entsprechenden Programmieren eines RFID-Tags der hergestellten Arzneimittelpackung sein.

Bei dem erfindungsgemäßen Verfahren zum Lagern und Ausgeben von Arzneimitteln in bzw. aus einer automatisierten Lageranordnung werden Kassetten, die jeweils eine Vielzahl von Arzneimittelportionen aufnehmen können und eine integrierte Abgabeeinrichtung zur Abgabe einzelner Arzneimittelportionen aufweisen, sowie Arzneimittelpackungen (herkömmlicher Art) auf Lagerflächeneines automatisierten Lagers eingelagert. Wenn dann später wenigstens ein gewünschtes Arzneimittel ausgegeben werden soll, wird eine das wenigstens eine gewünschte Arzneimittel enthaltende Arzneimittelpackung und/oder wenigstens eine Kassette, die eine den wenigstens einen gewünschten Arzneimittel entsprechende Arzneimittelportion enthält, von einem Bediengerät ergriffen oder aufgenommen und von der Lagerfläche entnommen. Wenn eine das wenigstens eine gewünschte Arzneimittel enthaltende Arzneimittelpackung entnommen wurde, wird die Arzneimittelpackung von dem Bediengerät zu einer Arzneimittelabgabestelle (der Gesamtanordnung) gebracht. Wenn andererseits eine eine dem wenigstens einen gewünschten Arzneimittel entsprechende Arzneimittelportion enthaltende Kassette entnommen wurde, wird die Kassette von den Bediengerät zu einer Kassettenaufnahme einer Dispensiervorrichtung gebracht. Dieser Schritt wird selbstverständlich nur dann ausgeführt, wenn sich nicht bereits eine solche Kassette in einer Kassettenaufnahme der Dispensiervorrichtung befindet. Wenn wenigstens eine Kassette zu einer Kassettenaufnahme gebracht worden ist bzw. sich dort befindet, wird die Abgabeeinrichtung der wenigstens eine Kassette derart aktiviert, daß wenigstens eine dem wenigstens einen gewünschten Arzneimittel entsprechende Arzneimittelportion aus der Kassette entnommen wird. Die wenigstens eine Arzneimittelportion wird dann von der Dispensiervorrichtung in eine herzustellende Arzneimittelpackung verpackt, so daß Arzneimittelportionen der dem wenigstens einen gewünschten Arzneimittel entsprechenden Art in entsprechender Anzahl und Reihenfolge in der herzustellenden Arzneimittelpackung verpackt werden.

Die in der Dispensiervorrichtung hergestellte Arzneimittelpackung kann anschließend zu der Arzneimittelabgabestelle gebracht werden. Bei der Abgabestelle handelt es sich beispielsweise um einen Ort auf einem Transportband, welches die Arzneimittelpackung zu einem vorgegebenen Abgabeort der Apotheke transportiert. Die hergestellte Arzneimittelpackung kann aber auch von dem Bediengerät ergriffen und auf eine der Lagerflächen gebracht werden. Beispielsweise kann eine Arzneimittelpackung von der Dispensiervorrichtung der automatisierten Lageranordnung auf der Grundlage von Informationen einer Verschreibung, die über ein Datenkommunikationsnetzwerk übermittelt worden sind, bereits hergestellt werden, bevor der empfangende Patient in der Apotheke erscheint. Die hergestellte Arzneimittelpackung wird dann auf den Lagerflächen zwischengelagert, bis sie von dem Patienten abgeholt wird. Erst dann wird sie wieder von der Lagerfläche entnommen und zur Arzneimittelabgabestelle transportiert.

Wenn die hergestellte Arzneimittelpackung (beispielsweise ein Tablettenblister) nicht unmittelbar von einem Bediengerät (z. B. einem Sauggreifer) ergriffen werden kann, so ist bei einer bevorzugten Ausführungsform vorgesehen, daß die hergestellte Arzneimittelpackung zunächst in einen Behälter gelegt wird und der Behälter von dem Bediengerät ergriffen und auf einer der Lagerflächen gebracht wird. Später (beim Abholen des Medikaments) wird der Behälter von dem Bediengerät erneut ergriffen und zu einer Arzneimittelabgabestelle gebracht. Die hergestellte Arzneimittelpackung wird entnommen und der Behälter wird zu der Dispensiervorrichtung zurückgeführt.

Vorteilhafte und/oder bevorzugte Weiterbildungen der Erfindung sind in den Unteransprüchen gekennzeichnet.

Im folgenden wird die Erfindung anhand eines in der Zeichnung schematisch dargestellten bevorzugten Ausführungsbeispiels näher erläutert.

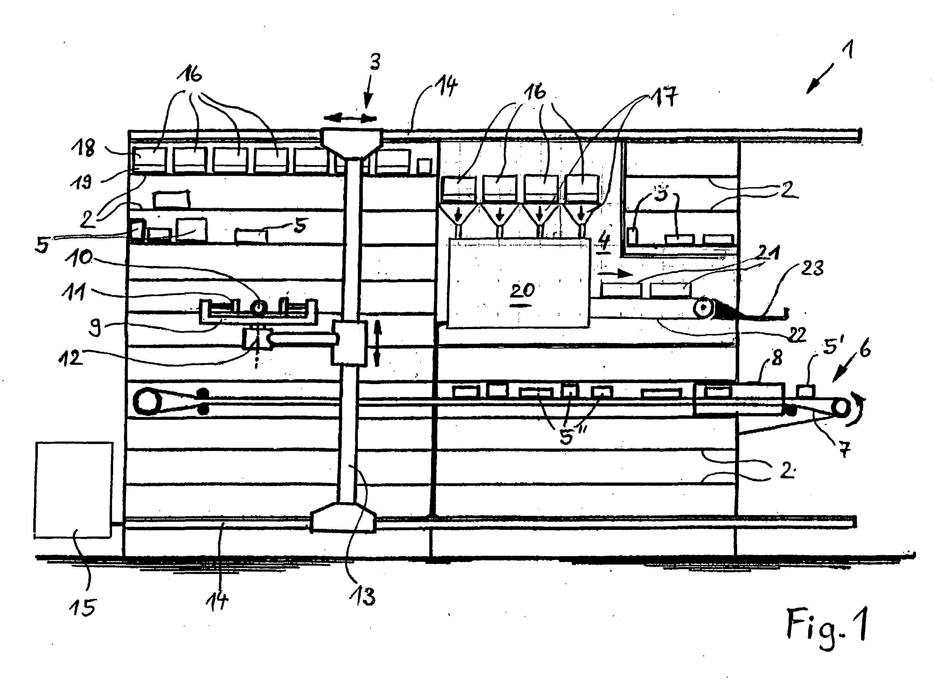

Figur 1 zeigt eine schematische Darstellung einer Ausführungsform der erfindungsgemäßen automatisierten Lageranordnung.

Die in Figur 1 gezeigte Lageranordnung 1 kombiniert ein ebene Regalböden 2 und ein vor den Regalböden 2 verfahrbares Bediengerät 3 aufweisendes Regallager mit einer Dispensiervorrichtung 4 zur Herstellung von Arzneimittelpackungen, die jeweils mehrere Arzneimittelportionen derselben oder verschiedener Art enthalten.

Auf den Regalböden 2 des Regallagers werden Arzneimittelpackungen 5 gelagert, die mit Hilfe des Bediengeräts 3 ein-und ausgelagert werden können. Zum Zwecke des Einlagerns von Arzneimittelpackungen 5 weist die Lageranordnung 1 eine Einlagerungsstation 6 auf, an der die Arzneimittelpackungen 5' auf ein umlaufendes Förderband 7 von einem Benutzer aufgelegt werden können. Eine auf das Förderband 7 aufgelegte Arzneimittelpackung 5' durchläuft eine in Figur 1 schematisch dargestellte Identifizier- und Meßstation 8, in der die Abmessungen der einzulagernden Arzneimittelpackung 5' erfaßt und eine auf der Packung angeordnete Identifikationsinformation (z.B. Barcode) gelesen wird. Nachdem eine einzulagernde Arzneimittelpackung 5' auf dem Förderband 7 die Identifikations- und Meßstation 8 durchlaufen hat, gelangt sie in einen Bereich des Förderbands 7, auf den das Bediengerät 3 zugreifen kann, um die einzulagernde Arzneimittelpackung von dem Förderband 7 zu entnehmen und zu einer geeigneten Lagerstelle auf einem der Regalböden 2 zu transportieren. Der im Zugriffsbereich des Bediengeräts 3 angeordnete Abschnitt des Förderbands bildet einen Einlagerungspuffer für die identifizierten und vermessenen einzulagernden Arzneimittelpackungen 5". Anstelle der in Figur 1 gezeigten Einlagerungsstation und des ein Förderband umfassenden Einlagerungspuffers können eine Reihe alternativer Anordnungen und Vorrichtungen zum Identifizieren, Vermessen, Positionieren und Zwischenspeichern (Puffern) einzulagernder Arzneimittelpackungen verwendet werden. Beispielsweise sind Einlagerungsvorrichtungen denkbar, bei denen eine größere Menge einzulagernder unterschiedlicher Arzneimittelpackungen einfach in einen Aufnahmebunker gekippt werden, woraufhin eine automatische Vereinzelung der Packungen, ein Identifizieren, ein Vermessen und ein Positionieren der einzulagernden Packungen an einer für das Bediengerät zugreifbaren Stelle stattfindet.

Das in Figur 1 gezeigte Bediengerät 3 weist einen Transporttisch 9 mit Greifeinrichtungen zum Festhalten von Arzneimittelpackungen, Einschieben von Arzneimittelpackungen auf einen Regalboden und Herunterziehen von Arzneimittelpackungen von einem Regalboden auf. Die Greifeinrichtungen umfassen beispielsweise einen Sauggreifer 10, der die dem Bediengerät 3 zugewandten Stirnflächen von auf einem Regalboden 2 aufliegenden Arzneimittelpackungen 5 ansaugen und die Arzneimittelpakkungen 5 auf den Transporttisch 9 ziehen kann. Die Greifeinrichtungen umfassen ferner Backengreifer 11, die sich an die Seitenwandungen einer auf dem Transporttisch 9 aufliegenden Packung anlegen und die Packung somit zentrieren und festhalten können. Darüber hinaus können Backengreifer und Sauggreifer zusammenwirken, um das Ein- bzw. Auslagern der Arzneimittelpackungen auf die Regalböden 2 zu bewirken. Bei der in Figur 1 gezeigten Ausführungsform kann sich der Transporttisch 9 erstens um eine Achse 12 drehen, zweitens entlang einer Führung 13 nach oben oder unten bewegen und drittens entlang der Schienen 14 in Längsrichtung vor dem Regal bewegen. Die Bewegung des Transporttischs 9 und der Greifeinrichtungen 10, 11 sowie die Bewegung des Transportbands 7 werden durch eine Steuereinrichtung 15 gesteuert. Darüber hinaus ist die Steuereinrichtung 15 mit der Identifikations- und Meßstation 8 gekoppelt. Die Steuereinrichtung 15 steuert das Transportband 7 sowie das Bediengerät 3 in Abhängigkeit von den an der Meßstation erfaßten Abmessungen sowie der erfaßten Identifikation und in Abhängigkeit von den zur Verfügung stehenden Lagerflächen auf den Regalböden 2. Ein Speicher der Steuereinrichtung 15 enthält sämtliche Informationen über eingelagerte Arzneimittelpackungen und deren Lagerorte.

In diese an sich bekannte automatisierte Regellageranordnung wird erfindungsgemäß eine Dispensiervorrichtung 4 integriert. Die Dispensiervorrichtung 4 dient der Herstellung von Arzneimittelpackungen, die eine vorgegebene Anzahl von Arzneimittelportionen, d.h. Tabletten, Kapseln und/oder Ampullen oder dergleichen, enthalten, wobei die hergestellten Arzneimittelpackungen Arzneimittelportionen derselben oder verschiedener Art in einer vorgegebenen Anordnung oder Sequenz enthalten können. Beispielsweise ist die Dispensiervorrichtung 4 in der Lage, einzelne Arzneimittelportionen in Tablettenblister zu verschweißen oder in kleine Kunststoffbecher vorgegebener Anordnung einzufüllen und die kleinen Becher zu verschließen. Die Dispensiervorrichtung entnimmt die einzelnen Arzneimittelportionen (Tabletten, Kapseln, Ampullen) Kassetten 16, die in Kassettenaufnahmen 17 liegen. Die Dispensiervorrichtung 4 weist eine vorgegebene Anzahl von Kassettenaufnahmen 17 auf; bei der in Figur 1 schematisch dargestellten Ausführungsform sind vier Kassettenaufnahmen 17 mit jeweils einer einliegenden Kassette 16 schematisch gezeigt. Die Kassetten 16 umfassen einen Behälter 18 zur Aufnahme der Arzneimittelportionen und eine Abgabeeinrichtung 19, die sich beispielsweise unter dem Behälter 18 befindet und beispielsweise einen Mechanismus aufweist, der bei Ansteuerung durch geeignete elektrische Steuersignale einzelne Arzneimittelportionen aus dem Behälter 18 entnimmt und ausgibt. Jede der Kassettenaufnahmen 17 weist eine Auslöseeinrichtung auf, die mit der Abgabeeinrichtung 19 der einliegenden Kassette 16 derart zusammenwirkt, daß in Abhängigkeit von Steuersignalen Arzneimittelportionen in einer vorgegebenen Anzahl und Sequenz ausgegeben werden können. Die Dispensiervorrichtung 4 ist ebenfalls mit der Steuereinrichtung 15 gekoppelt, so daß die Steuereinrichtung die Steuersignale an die Auslöseeinrichtung erzeugen kann. Die Dispensiervorrichtung 4 enthält ferner eine Verpackungsvorrichtung 20, die die aus den Kassetten 16 über die Kassettenaufnahmen 17 austretenden Arzneimittelportionen aufnehmen und in herzustellende Arzneimittelpackungen verpacken kann. Die hergestellten Arzneimittelpackungen 21 verlassen die Verpackungsvorrichtung 20 über eine Fördereinrichtung, beispielsweise ein Förderband 22. Die von der Verpackungsvorrichtung hergestellten Arzneimittelpackungen 21 können von dem Bediengerät 3 beispielsweise von dem Förderband 22 entnommen und auf einen Regalboden 2 zwischengelagert werden. Die herstellten Arzneimittelpackungen 21 können aber auch von dem Förderband 22 zu einer Ausgabestelle 23 transportiert werden, wo sie von dem Apothekenpersonal entnommen werden können.

Erfindungsgemäß sind die Kassetten 16 so ausgebildet, daß sie - wie auch eine Arzneimittelpackung 5 - von den Greifeinrichtungen 10, 11 des Bediengeräts 3 ergriffen und transportiert werden können. Die Kassetten 16 mit Behälter 18 und Abgabemechanismus 19 weisen beispielsweise ebene Seitenflächen und eine (zumindest in einem vorgegebenen Bereich) ebene Frontfläche auf, so daß der Backengreifer 11 an den Seitenflächen und der Sauggreifer 10 an der Frontfläche angreifen kann. Das Bediengerät 3 wird dann so angesteuert, daß es die Kassetten 16 auf Regalböden 2 einlagern beziehungsweise von Regalböden 2 entnehmen und zu jeweils einer Kassettenaufnahme 17 der Dispensiervorrichtung 4 transportieren kann. Bei der in Figur 1 gezeigten Ausführungsform liegen vier Kassetten 16 auf den vier Kassettenaufnahmen 17 der Dispensiervorrichtung 4 auf, während eine Reihe weitere Kassetten 16 auf einem der Regalböden 2 (links, oben) aufliegen. Wenn Arzneimittelportionen einer bestimmten Kassette 16 von der Dispensiervorrichtung 4 benötigt werden und eine solche Kassette 16 noch nicht auf einer Aufnahme 17 aufliegt, fährt das Bediengerät 3 zunächst zu einer Kassettenaufnahme 17, auf der eine gegenwärtig nicht benötigte Kassette 16 aufliegt, entnimmt diese Kassette und bringt sie zu einer freien Ablagestelle auf einem Regalboden 2. Anschließend fährt das Bediengerät zu der Kassette 16 mit den gewünschten Arzneimittelportionen, entnimmt die Kassette 16 von dem Regalboden 2 und transportiert die gewünschte Kassette zu der freien Kassettenaufnahme 17 der Dispensiervorrichtung 4. Auf diese Weise kann eine Dispensiervorrichtung 4 mit relativ wenigen Kassettenaufnahmen 17 verwendet und dennoch flexibel eine große Anzahl verschiedener Arzneimittelportionen verpackt werden. Darüber hinaus ermöglicht das Vorsehen der Dispensiervorrichtung 4 bei einem automatisierten Regallager die Abgabe von Arzneimitteln als Einzeldosen. Ein derart ausgerüstetes automatisiertes Apothekenregallager kann nicht nur in herkömmlicher Weise Arzneimittelpackungen an Patienten (mit oder ohne Rezept) abgeben; eine solche Lageranordnung kann auch nach Angabe einer Verordnung in bestimmter Menge und Sequenz verpackte Einzeldosen von Tabletten oder Kapseln herstellen und an Krankenhäuser oder Altenheim liefern. Auf den hergestellten Arzneimittelpackungen können Angaben zum Patienten, Dosierinformationen und Einnahmehinweise aufgedruckt werden. Die Herstellung solcher Arzneimittelpackungen in einer Apotheke erlaubt, im Unterschied zur Herstellung der Blisterpackungen in Krankenhäusern oder Altenheimen, eine höhere Arzneimittelsicherheit und entlastet das Personal der Krankenhäuser bzw. Altenheime. Darüber hinaus können bei der erfindungsgemäßen Lageranordnung in einer Apotheke eine große Anzahl von Kassetten 16 zusätzlich zu den herkömmlichen Arzneimittelpakkungen gelagert werden. Die Dispensiervorrichtung ist flexibel, da sie zunächst mit wenigen Kassetten betrieben und später auf mehrere tausend Kassetten erweitert werden kann, ohne daß es einer Änderung der konstruktiven Gestaltung der Dispensiervorrichtung 4 oder des Bediengeräts 3 bedarf.

Es sind viele alternative Ausführungsformen denkbar. Anstelle eines Regallagers mit ebenen Regalböden kann auch ein System mit Lagerschächten verwendet werden, wobei einige der Lagerschächte Kassetten aufnehmen können. Die Lageranordnung kann eine oder mehrere Dispensiervorrichtungen, ein oder mehrere Bediengeräte und/oder eine Kombination von ebenen Regalböden und Schachtsystemen enthalten. Die verwendeten Kassetten können dieselbe Größe oder mehrere verschiedene Größen haben. Zur Identifikation können die Kassetten 16 einen optisch lesbaren Code (z.B. Strichcode) oder auch ein RFID-Chip enthalten. Die Kassetten 16 werden vorzugsweise in derselben Weise eingelagert wie herkömmliche Arzneimittelpackungen, d.h. sie werden identifiziert, vermessen und in vorgegebener Orientierung an einer Stelle bereit gestellt, an der das Bediengerät 3 auf sie zugreifen kann. Es sind aber auch Anordnungen denkbar, bei denen spezielle Einlagerungsstationen für Kassetten vorgesehen sind. Sobald eine Kassette 16 geleert ist, wird sie von dem Bediengerät ausgelagert, so daß sie wieder neu befüllt werden kann. Die Kassetten 16 werden vorzugsweise von dem Bediengerät 3 direkt zu den Kassettenaufnahmen 17 transportiert. Alternativ ist es auch denkbar, daß die Kassetten 16 von dem Bediengerät 4 zunächst zu einer Übergabestelle der Dispensiervorrichtung 4 transportiert werden, wobei die Dispensiervorrichtung 4 anschließend die Kassetten 16 von der Übergabestelle zu den Kassettenaufnahmen 17 weitertransportiert.

Die Transportvorgänge des Bediengeräts 3, beispielsweise das Auswechseln der Kassetten 16, können parallel zur Entnahme von Arzneimittelportionen an der Dispensiervorrichtung 4 und deren Verpacken ausgeführt werden. Während beispielsweise Arzneimittelportionen aus einer ersten Kassette entnommen und verpackt werden, kann eine nicht mehr benötigte Kassette aus einer Kassettenaufnahme entnommen und eine anschließend benötigte Kassette in die frei gewordene Kassettenaufnahme eingelegt werden. Die Steuereinrichtung 15 koordiniert die Abläufe so, daß trotz einer geringen Anzahl von Kassettenaufnahmen und einer geringen Größe der Dispensiervorrichtung eine hohe Geschwindigkeit der Herstellung von Arzneimittelpackungen bei hoher Flexibilität erreicht wird.

Die Steuereinrichtung 15 umfaßt vorzugsweise ein Computersystem mit Benutzerschnittstelle (Tastatur, Maus, Display) und I/O-Schnittstellen zum Empfang von Steuersignalen (von Sensoren) und zur Ausgabe von Steuersignalen an Stelleinrichtungen (Bediengerät, Förderband, Verpackungseinrichtung). Das Computersystem enthält neben der Steuersoftware unter anderem Software für die Lagerverwaltung und zur Verwaltung von Dosierplänen. Die aus den Dosierplänen abgeleiteten Daten werden unter Steuerung dieser Software an Vorrichtungen der Dispensiervorrichtung 4 weitergeleitet, die entsprechende Aufdrucke auf der hergestellten Arzneimittelpackung erzeugen.

## Patentansprüche

1. Automatisierte Lageranordnung (1) zum Lagern und Ausgeben von Arzneimitteln, aufweisend:
mehrere Lagerflächen (2), die jeweils mehrere Arzneimittelpackungen (5) und/oder Kassetten (16) aufnehmen können, wobei die Kassetten (16) jeweils eine Vielzahl von Arzneimittelportionen aufnehmen können und eine integrierte Abgabeeinrichtung (19) zur Abgabe einzelner Arzneimittelportionen aufweisen,
wenigstens ein Bediengerät (3) zum Ein- und Auslagern von Arzneimittelpackungen (5) und Kassetten (16) auf die bzw. aus den Lagerflächen (2),
eine Dispensiervorrichtung (4) zur Herstellung von jeweils mehrere Arzneimittelportionen enthaltenden Arzneimittelpackungen (21), wobei die Dispensiervorrichtung (4)
wenigstens eine Kassettenaufnahme (17), der das Bediengerät (3) jeweils eine Kassette (16) zuführen kann und aus der das Bediengerät(3) die Kassette (16) wieder entnehmen kann,
eine Auslöseeinrichtung, die die Abgabeeinrichtung (19) der in einer Kassettenaufnahme (17) enthaltenen Kassette (16) derart aktivieren kann, daß Arzneimittelportionen in einer vorgegebenen Anzahl austreten, und
eine Verpackungsvorrichtung (20), die jeweils mehrere austretende Arzneimittelportionen aufnehmen und in die herzustellende Arzneimittelpackung (21) verpacken kann, aufweist, und
eine Steuereinrichtung (15), die mit dem Bediengerät (3) und mit der Auslöseeinrichtung und der Verpackungsvorrichtung (20) gekoppelt ist und diese so steuert, daß Arzneimittelportionen wenigstens einer vorgegebenen Art in jeweils vorgegebener Anzahl und Reihenfolge in der herzustellenden Arzneimittelpackung verpackt werden.

2. Automatisierte Lageranordnung nach Anspruch 1, **dadurch gekennzeichnet, daß** die Lagerflächen ebene Regalböden (2) eines Regallagers sind.

3. Automatisierte Lageranordnung nach Anspruch 2, **dadurch gekennzeichnet, daß** das Bediengerät (3) vor den Regalböden verfahrbar ist und einen Transporttisch (9) aufweist und die Arzneimittelpackungen (5, 21) oder Kassetten (16) von den Regalböden (2) auf den Transporttisch ziehen kann.

4. Automatisierte Lageranordnung nach Anspruch 3, **dadurch gekennzeichnet, daß** das Bediengerät (3) einen Sauggreifer (10) aufweist.

5. Automatisierte Lageranordnung nach einem der Ansprüche 1 bis 4, **dadurch gekennzeichnet, daß** die Arzneimittelpackungen und die Kassetten auf den Lagerflächen (2) chaotisch und unter optimaler Ausnutzung der zur Verfügung stehenden Lagerflächen gelagert sind.

6. Automatisierte Lageranordnung nach_einem der Ansprüche 1 bis 5, **dadurch gekennzeichnet, daß** die integrierte Abgabeeinrichtung (19) einer Kassette (16) einen mechanisch betätigbaren Ausgabemechanismus zur Ausgabe jeweils einer einzelnen Arzneimittelportion umfaßt und daß die Auslöseeinrichtung der Dispensiervorrichtung (4) einen durch elektrische Steuersignale der Steuereinrichtung (15) auslösbaren Betätigungsmechanismus zum Betätigen des Ausgabemechanismus aufweist.

7. Automatisierte Lageranordnung nach einem der Ansprüche 1 bis 5, **dadurch gekennzeichnet, daß** die integrierte Abgabeeinrichtung (19) einer Kassette (16) einen durch elektrische Steuersignale betätigbaren elektro-mechanischen Ausgabemechanismus zur Ausgabe einzelner Arzneimittelportionen und eine Schnittstelle mit ersten Kontakten umfaßt und daß die Auslöseeinrichtung der Dispensiervorrichtung eine Steuersignale der Steuereinrichtung (15) empfangende Schnittstelle mit an der Kassettenaufnahme (17) angeordneten zweiten Kontakten umfaßt, wobei dann, wenn eine Kassette (16) in der Kassettenaufnahme (17) liegt, die ersten mit den zweiten Kontakten derart verbunden sind, daß die Steuersignale und eine Spannungsversorgung an den elektro-mechanischen Ausgabemechanismus weitergeleitet werden können.

8. Automatisierte Lageranordnung nach einem der Ansprüche 1 bis 7, **dadurch gekennzeichnet, daß** die Verpackungsvorrichtung (20) ein Vorrichtung zum Einschweißen der Arzneimittelportionen in Folien oder Behälter aufweist.

9. Automatisierte Lageranordnung nach einem der Ansprüche 1 bis 8, **dadurch gekennzeichnet, daß** die Dispensiervorrichtung (4) eine Kennzeichnungsvorrichtung zum Kennzeichnen der herzustellenden Arzneimittelpackungen aufweist.

10. Verfahren zum Lagern und Ausgeben von Arzneimitteln in bzw. aus einer automatisierten Lageranordnung, wobei:
Kassetten, die jeweils eine Vielzahl von Arzneimittelportionen aufnehmen können und eine integrierte Abgabeeinrichtung zur Abgabe einzelner Arzneimittelportionen aufweisen, sowie Arzneimittelpackungen auf Lagerflächen eines automatisierten Lagers eingelagert werden und dann, wenn wenigstens ein gewünschtes Arzneimittel ausgegeben werden soll:
wenigstens eine das wenigstens eine gewünschte Arzneimittel enthaltende Arzneimittelpackung und/oder wenigstens eine Kassette, die eine dem wenigstens einen gewünschten Arzneimittel entsprechende Arzneimittelportion enthält, von einem Bediengerät ergriffen und von der Lagerfläche entnommen wird,
dann, wenn eine das wenigstens eine gewünschte Arzneimittel enthaltende Arzneimittelpackung entnommen wurde, die Arzneimittelpackung von dem Bediengerät zu einer Arzneimittelabgabestelle gebracht wird,
dann, wenn eine eine dem wenigstens einen gewünschten Arzneimittel entsprechende Arzneimittelportion enthaltende Kassette entnommen wurde, die Kassette von dem Bediengerät zu einer Kassettenaufnahme einer Dispensiervorrichtung gebracht wird,
dann, wenn wenigstens eine Kassette zu einer Kassettenaufnahme gebracht worden ist, die Abgabeeinrichtung der wenigstens einen Kassette derart aktiviert wird, daß wenigstens eine dem wenigstens einen gewünschten Arzneimittel entsprechende Arzneimittelportion aus der Kassette entnommen wird, und die wenigstens eine Arzneimittelportion von der Dispensiervorrichtung in eine herzustellende Arzneimittelpackung verpackt wird, so daß Arzneimittelportionen der dem wenigstens einen gewünschten Arzneimittel entsprechenden Art in entsprechender Anzahl und Reihenfolge in der herzustellenden Arzneimittelpackung verpackt werden.

11. Verfahren zum Lagern und Ausgeben von Arzneimitteln nach Anspruch 10, **dadurch gekennzeichnet, daß** die hergestellte Arzneimittelpackung zu der Arzneimittelabgabestelle gebracht wird.

12. Verfahren zum Lagern und Ausgeben von Arzneimitteln nach Anspruch 10, **dadurch gekennzeichnet, daß** die hergestellte Arzneimittelpackung von dem Bediengerät ergriffen und auf eine der Lagerflächen gebracht wird.

13. Verfahren zum Lagern und Ausgeben von Arzneimitteln nach Anspruch 10, **dadurch gekennzeichnet, daß** die hergestellte Arzneimittelpackung in einen Behälter gelegt wird und der Behälter von dem Bediengerät ergriffen und auf eine der Lagerflächen gebracht wird, später der Behälter von dem Bediengerät erneut ergriffen und zu einer Arzneimittelabgabestelle gebracht wird, die hergestellte Arzneimittelpackung entnommen wird und der Behälter zu der Dispensiervorrichtung zurückgeführt wird.

14. Verfahren zum Lagern und Ausgeben von Arzneimitteln nach einem der Ansprüche 10 bis 13, **dadurch gekennzeichnet, daß** die Arzneimittelpackungen und die Kassetten auf den Lagerflächen chaotisch und unter optimaler Ausnutzung der zur Verfügung stehenden Lagerflächen eingelagert werden.

15. Verfahren zum Lagern und Ausgeben von Arzneimitteln nach einem der Ansprüche 10 bis 14, **dadurch gekennzeichnet, daß** die herzustellende oder hergestellte Arzneimittelpackung vor, während oder nach dem Verpacken der Arzneimittelportionen mit einer Kennzeichnung versehen wird.

## Claims

1. An automated store arrangement (1) for storing and dispensing medicaments, having:
a number of storage areas (2) that each receive a number of medicament packs (5) and/or cartridges (16), the cartridges (16) each being able to receive a multiplicity of medicament portions and having an integrated discharge device (19) for discharging individual medicament portions,
at least one operating device (3) for storing and retrieving medicament packs (5) and cartridges (16) on and from the storage areas (2),
a dispensing device (4) for producing medicament packs (21) that each contain a number of medicament portions, the dispensing device (4) having
at least one cartridge receptacle (17), to which the operating device (3) can in each case feed a cartridge (16) and from which the operating device (3) can remove the cartridge (16),
a release device, which can activate the discharge device (19) of the cartridge (16) contained in a cartridge receptacle (17) in such a way that medicament portions emerge in a predetermined number, and
a packing device (20), which can in each case receive a number of emerging medicament portions and pack them in the medicament pack (21) to be produced, and
a control device (15), which is coupled to the operating device (3) and to the release device and the packing device (20) and controls them in such a way that medicament portions of at least one predetermined kind are packed in a respectively predetermined number and sequence in the medicament pack to be produced.

2. The automated store arrangement as claimed in claim 1, **characterized in that** the storage areas are level shelves (2) of a high-bay store.

3. The automated store arrangement as claimed in claim 2, **characterized in that** the operating device (3) can be made to move in front of the shelves and has a transport table (9) and can draw the medicament packs (5, 21) or cartridges (16) from the shelves (2) onto the transport table.

4. The automated store arrangement as claimed in claim 3, **characterized in that** the operating device (3) has a suction gripper (10).

5. The automated store arrangement as claimed in one of claims 1 to 4, **characterized in that** the medicament packs and the cartridges are stored on the storage areas (2) chaotically and with optimum use of the storage areas available.

6. The automated store arrangement as claimed in one of claims 1 to 5, **characterized**
**in that** the integrated discharge device (19) of a cartridge (16) comprises a mechanically actuatable dispensing mechanism for dispensing in each case an individual medicament portion and
**in that** the release device of the dispensing device (4) has an actuating mechanism that can be triggered by electrical control signals of the control device (15) for actuating the dispensing mechanism.

7. The automated store arrangement as claimed in one of claims 1 to 5, **characterized**
**in that** the integrated discharge device (19) of a cartridge (16) comprises an electromechanical dispensing mechanism that can be actuated by electrical control signals for dispensing individual medicament portions and an interface with first contacts and
**in that** the release device of the dispensing device comprises an interface that receives control signals of the control device (15) and has second contacts arranged on the cartridge receptacle (17), the first contacts being connected to the second contacts in such a way that the control signals and a voltage supply can be passed on to the electromechanical dispensing mechanism whenever a cartridge (16) is lying in the cartridge receptacle (17).

8. The automated store arrangement as claimed in one of claims 1 to 7, **characterized in that** the packing device (20) has a device for sealing the medicament portions in foils or containers.

9. The automated store arrangement as claimed in one of claims 1 to 8, **characterized in that** the dispensing device (4) has a marking device for marking the medicament packs to be produced.

10. A method for storing and dispensing medicaments in and from an automated store arrangement, wherein
cartridges that can each receive a multiplicity of medicament portions and have an integrated discharge device for discharging individual medicament portions as well as medicament packs are stored on storage areas of an automated store and then, if at least one desired medicament is to be dispensed:
at least one medicament pack that contains the at least one desired medicament and/or at least one cartridge that contains a medicament portion corresponding to the at least one desired medicament is gripped by an operating device and removed from the storage area,
if a medicament pack containing at least one desired medicament has been removed, the medicament pack is brought by the operating device to a medicament dispensing location,
if a cartridge containing a medicament portion corresponding to the at least one desired medicament has been removed, the cartridge is brought by the operating device to a cartridge receptacle of a dispensing device,
if at least one cartridge has been brought to a cartridge receptacle, the discharge device of the at least one cartridge is activated in such a way that at least one medicament portion corresponding to the at least one desired medicament is removed from the cartridge and the at least one medicament portion is packed by the dispensing device in a medicament pack to be produced, with the result that medicament portions of the kind corresponding to at least one desired medicament are packed in the appropriate number and sequence in the medicament pack to be produced.

11. The method for storing and dispensing medicaments as claimed in claim 10, **characterized in that** the medicament pack produced is brought to the medicament discharging location.

12. The method for storing and dispensing medicaments as claimed in claim 10, **characterized in that** the medicament pack produced is gripped by the operator device and brought to one of the storage areas.

13. The method for storing and dispensing medicaments as claimed in claim 10, **characterized in that**
the medicament pack produced is placed in a container and the container is gripped by the operating device and brought to one of the storage areas,
later, the container is gripped once again by the operating device and brought to a medicament discharging location, the medicament pack produced is removed and the container is returned to the dispensing device.

14. The method for storing and dispensing medicaments as claimed in one of claims 10 to 13, **characterized in that** the medicament packs and the cartridges are stored on the storage areas chaotically and with optimum use of the storage areas available.

15. The method for storing and dispensing medicaments as claimed in one of claims 10 to 14, **characterized in that** the medicament pack to be produced or the medicament pack produced is provided with a marking during or after the packing of the medicament portions.

## Revendications

1. Agencement automatisé de stockage (1) pour stocker et délivrer des médicaments, comprenant :
plusieurs aires de stockage (2), pouvant recevoir chacune plusieurs boîtes de médicaments (5) et/ou des cassettes (16), lesdites cassettes (16) pouvant recevoir chacune une multiplicité de portions de médicaments et ayant un dispositif intégré de distribution (19) pour la distribution de portions séparées de médicaments,
au moins un appareil de manutention (3) pour emmagasiner ou prélever des boîtes de médicaments (5) et des cassettes (16) dans les aires de stockage ou hors des aires de stockage (2),
un dispositif de délivrance (4) pour fabriquer des boîtes de médicaments (21) contenant chacune plusieurs portions de médicaments, ledit dispositif de délivrance (4) présentant
au moins un logement de cassette (17) vers lequel l'appareil de manutention (3) peut amener une cassette (16) et d'où l'appareil de manutention(3) peut enlever la cassette (16),
un dispositif de déclenchement pouvant activer le dispositif de distribution (19) de la cassette (16) contenue dans le logement de cassettes (17) de telle manière que des portions de médicaments sortent en nombre prescrit, et
un dispositif d'emballage (20) pouvant recevoir plusieurs portions de médicaments sortant et les emballer dans la boîte de médicaments à fabriquer (21), et
un automatisme (15) couplé à l'appareil de manutention (3) et au dispositif de déclenchement et au dispositif d'emballage (20) et commandant ces derniers de telle manière que des portions de médicaments d'au moins un type prescrit soient emballées en nombre et dans l'ordre prescrits dans la boîte de médicaments à fabriquer.

2. Agencement automatisé de stockage selon la revendication 1, **caractérisé en ce que** les aires de stockage sont des tablettes planes (2) d'un rayonnage.

3. Agencement automatisé de stockage selon la revendication 2, **caractérisé en ce que** l'appareil de manutention (3) peut être amené devant les tablettes de rayonnage et présente une table de transport (9) et peut tirer les boîtes de médicaments (5, 21) ou les cassettes (16) des tablettes de rayonnage (2) sur la table de transport.

4. Agencement automatisé de stockage selon la revendication 3, **caractérisé en ce que** l'appareil de manutention (3) présente un préhenseur à ventouse (10).

5. Agencement automatisé de stockage selon une des revendications 1 à 4, **caractérisé en ce que** les boîtes de médicaments et les cassettes sont rangées dans les aires de stockage (2) en ordre chaotique en exploitant de manière optimale les surfaces de stockage disponibles.

6. Agencement automatisé de stockage selon une des revendications 1 à 5, **caractérisé en ce que** le dispositif intégré de distribution (19) d'une cassette (16) renferme un mécanisme manoeuvrable mécaniquement pour dispenser une portion séparée de médicaments et **en ce que** le dispositif de déclenchement du dispositif de délivrance (4) présente un mécanisme de manoeuvre déclenchable par des signaux électriques délivrés par l'automatisme (15) pour actionner le mécanisme de sortie.

7. Agencement automatisé de stockage selon une des revendications 1 à 5, **caractérisé en ce que** le dispositif intégré de distribution (19) d'une cassette (16) renferme un mécanisme électromécanique manoeuvrable par des signaux électriques de commande pour dispenser des portions séparées de médicaments et une interface avec une première série de contacts et **en ce que** le dispositif de déclenchement du dispositif de délivrance renferme une interface recevant les signaux délivrés par l'automatisme (15) avec une deuxième série de contacts disposés sur le logement de la cassette (17), de sorte que lorsqu'une cassette (16) se trouve dans le logement (17), la première série de contacts est reliée à la deuxième série afin de pouvoir transmettre les signaux de commande et l'alimentation électrique au mécanisme électromécanique.

8. Agencement automatisé de stockage selon une des revendications 1 à 7, **caractérisé en ce que** le dispositif d'emballage (20) présente un dispositif pour emballer sous vide les portions de médicaments dans un film plastique ou un conteneur.

9. Agencement automatisé de stockage selon une des revendications 1 à 8, **caractérisé en ce que** le dispositif de délivrance (4) présente un dispositif de marquage pour marquer les boîtes de médicaments à fabriquer.

10. Procédé pour stocker et délivrer des médicaments dans un ou hors d'un agencement automatisé de stockage, dans lequel :
des cassettes, lesquelles peuvent recevoir une multiplicité de portions de médicaments et qui présentent un dispositif intégré pour la distribution de portions séparées de médicaments, ainsi que des boîtes de médicaments sont emmagasinées dans les aires de stockage d'un magasin automatisé, puis, chaque fois qu'au moins un médicament choisi doit être sorti :
au moins une boîte contenant au moins le médicament choisi et/ou au moins une cassette contenant une portion correspondant à le moins un médicament choisi est saisie par un appareil de manutention et sortie de l'aire de stockage,
puis quand une boîte contenant au moins le médicament choisi a été prélevée, ladite boîte de médicaments est amenée par l'appareil de manutention vers un poste de distribution de médicaments,
puis quand une cassette contenant une portion de médicaments correspondant à au moins le médicament choisi a été prélevée, ladite cassette est amenée par l'appareil de manutention dans un logement de cassettes dans un dispositif de délivrance,
puis quand au moins une cassette a été amenée dans un logement de cassettes, le dispositif de distribution d'au moins cette cassette est activé de manière à ce qu'au moins une portion de médicaments correspondant à au moins le médicament choisi est prélevée dans la cassette et qu'au moins cette portion de médicaments est emballée par le dispositif de délivrance dans une boîte de médicaments à fabriquer, de sorte que des portions de médicaments de type correspondant à au moins le médicament choisi sont emballées en nombre correspondant et dans l'ordre correspondant dans la boîte de médicaments à fabriquer.

11. Procédé pour stocker et délivrer des médicaments selon la revendication 10, **caractérisé en ce que** la boîte de médicaments à fabriquer est amenée au poste de distribution des médicaments.

12. Procédé pour stocker et délivrer des médicaments selon la revendication 10, **caractérisé en ce que** la boîte de médicaments à fabriquer est prise par l'appareil de manutention et amenée sur une des aires de stockage.

13. Procédé pour stocker et délivrer des médicaments selon la revendication 10, **caractérisé en ce que** la boîte de médicaments à fabriquer est déposée dans un conteneur et ledit conteneur pris par l'appareil de manutention et amené sur une des aires de stockage, puis ultérieurement, ledit conteneur est de nouveau saisi par l'appareil de manutention et amené à un poste de distribution des médicaments où la boîte de médicaments fabriquée est prise puis amenée au dispositif de délivrance.

14. Procédé pour stocker et délivrer des médicaments selon une des revendications 10 à 13, **caractérisé en ce que** les boîtes de médicaments et les cassettes sont rangées dans les aires de stockage en ordre chaotique en exploitant de manière optimale les surfaces de stockage disponibles.

15. Procédé pour stocker et délivrer des médicaments selon une des revendications 10 bis 14, **caractérisé en ce que** la boîte de médicaments à fabriquer ou fabriquée est pourvue avant, pendant ou après emballage des portions de médicaments d'un marquage.
